# EUROPEAN PATENT SPECIFICATION

(11) **EP 1 568 817 B1**
(45) Date of publication and mention of the grant of the patent: **23.07.2008**
(21) Application number: 04425113.0
(22) Date of filing: 25.02.2004
(51) Int. Cl.: D06F 58/28

(54) **Laundry drier**
Wäschetrockner
Sèche-linge

(43) Date of publication of application: 31.08.2005
(73) Proprietor: Candy S.p.A., 20052 Monza (MI) (IT)
(72) Inventor: Fumagalli, Silvano, 20052 Monza (Milano) (IT)
(74) Representative: Vittorangeli, Lucia

(56) References cited:
- DE-A- 4 034 273
- DE-A- 19 613 310
- US-A1- 2003 061 728
- US-B1- 6 334 267

## Description

The present invention relates to a device for drying laundry, of the dryer or washer-dryer type providing the drying of laundry by means of an airflow.

A drying device according to the preamble of claim 1 is known from DE 196 13 310 A1, US 2003/0061728 A1, DE 40 34 273 A1 and US 6,334,267 B1.

The drying circuit of such drying devices typically comprises a basket/tank unit, a suction unit, an air/water or air/air heat exchanger and an electrical resistance heating unit.

In the case of a drying circuit known as a closed circuit, the airflow created by the suction unit is heated by the electrical resistance and conveyed into the basket or drum, where, by passing through the wet laundry, it causes the evaporation of the water contained in the fabrics. In the heat exchanger, generally of the rain type, the moist air is cooled by a cold water flow or a cool airflow. Due to cooling the vapour condenses and is collected and released together with the cooling water. The thus dehumidified air is then sucked by the suction unit and made to recirculate.

However in the case of a drying circuit known as an open circuit, the drying air is sucked from the environment and, once it has passed through the laundry and absorbed the moisture thereof, it is released directly into the environment.

The prior art drying devices, despite being satisfactory under many aspects, present a high electrical energy consumption. This drawback becomes increasingly important as the need to save energy becomes evermore pressing.

Besides, the prior art drying devices tend to ruin, after many drying cycles, both the laundry and certain components of the dryer itself.

The object of the present invention is therefore to provide a drying device, having characteristics such as to contribute to a reduction in the energy consumption necessary for drying and to treat at the same time both the laundry and the device itself with delicacy.

This and other objects are achieved by a laundry drying device according to claim 1 and a drying procedure according to claim 23.

It has in fact been shown that, during a drying cycle, the flow rate of air conveyed into the basket varies according to the resistance to the flow, due to the momentary position of the pieces of laundry inside the basket. Given that, according to the position of the laundry and the flow rate and speed of the airflow more or less efficient drying situations occur, it is possible to reduce energy consumption, by changing the position of the laundry and/or by adjusting the electrical power supply for example of the resistance, so as to reduce or eliminate, during the steps of low drying efficiency, the consumption of otherwise wasted energy.

In order to better understand the present invention and appreciate the advantages thereof certain non-limiting embodiments will be described below, making reference to the appended figures, wherein:

figure 1 is a schematised partial view of a drying machine according to a first embodiment of the invention;

figure 2 shows a control scheme of the drying machine in figure 1;

figure 3 is a schematised partial view of a drying machine according to a second embodiment of the invention;

figure 4 shows a control scheme of the dryer machine in figure 3;

figure 5 schematically shows the dependence between the number of revolutions that be detected at the rotor of a brushless motor for a rotor that conveys an airflow through an aperture and the flow rate of the airflow;

figure 6 schematically shows the dependence between the air pressure that can be detected in a pipe and the flow rate of the airflow through the pipe;

figure 7 schematically shows the dependence between the number of revolutions and the torque of a brushless motor.

With reference to the figures, a laundry drying machine 1 comprises a basket or drum 2 for housing the laundry. The basket 2 is provided with an inlet aperture 3 for a drying airflow 4 and an outlet aperture 5 for the moist air 6. A system of pipes 7, 8 with associated ventilator means, such as a fan rotor 9 driven by an electric motor 10, are provided to convey the drying airflow 4, through the inlet aperture 3 in the basket 2.

Suitable heating means put in a heat exchange relationship with the drying air 4, such as an electrical resistance 11, arranged in the airflow 4 upstream of the inlet aperture 3, are suitable to heat the air 4 before it enters the basket 2.

Advantageously, the laundry drying machine 1 comprises further means for moving the basket 2 so as to turn and spin the laundry, thus exposing it to the drying airflow 4. Such means comprise for example an electric motor 12 that sets the basket 2 rotating, preferably with an alternating sense of direction.

The laundry drying machine 1 is suited to perform a drying program and comprises means suited to influence said drying program according to the pressure or flow rate of the airflow 4 upstream of the inlet aperture 3.

According to the embodiment shown in the figures, the drying program is determined at least by the following drying parameters:
- flow rate of the airflow 4 created by the rotor 9 with the fan motor 10;
- heating power of the electrical heating resistance 11;
- intensity and type of motion of the basket 2, particularly the rotational speed thereof and the sense of rotation determined by the basket motor 12.

Advantageously, the abovementioned means for influencing the drying program comprise sensor means suited to detect a value indicative of the pressure or the flow rate of the airflow 4 upstream of the inlet aperture 3, connected with special control and regulation means that, in turn influence at least one of the drying parameters in dependence of the measured value.

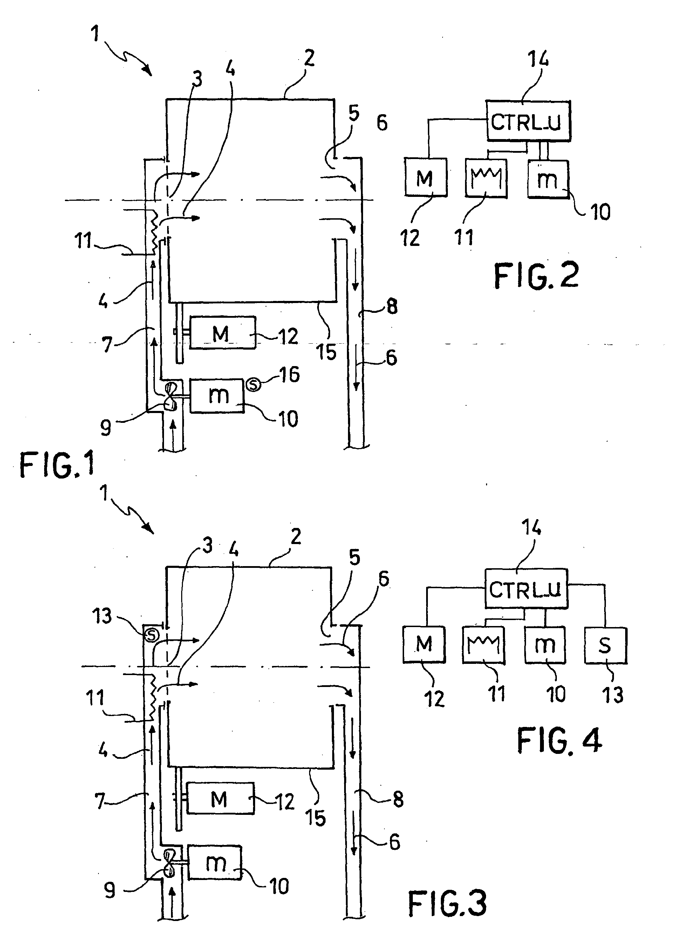

In accordance with the embodiment, shown in figure 3, said sensor means comprise a pressure sensor 13 connected to a control unit 14, such as a microcomputer, suited to compare the data supplied by the sensor 13 with comparative values, advantageously taken from special memorised work tables or curves and adapted to the different drying programs. The control unit 14 is in turn connected with the fan motor 10, the basket motor 12 and the heating resistance 13 and enables the regulation of the electrical power supply thereof on the basis of the data of the sensor 13 i.e. by the result of the comparison of the data of the sensor 13 with the memorised comparative data.

Within this context, the control unit 14 can be a single centralised component or a plurality of decentralised units, for example composed of different control devices directly associated to the motors 10, 12 and to the resistance 11, for which part of the data processing can take place in a centralised way, whilst another part of the data processing is performed for example directly by the sensor device 13 or by the motor control 10, 12.

For example, a pressure increase upstream of the inlet aperture 3, indicative of a stagnation of the airflow 4 due for example due to the obstruction of the inlet aperture 3 by a piece of laundry, is detectable and identifiable as such by the sensor 13 and the control unit 14, which is advantageously suitable to reduce or interrupt the current supply of the resistance 11 until the pressure detected by the sensor 13 returns to the normal value, that is to a value that indicates a normal or high drying efficiency.

In accordance with a further embodiment, the control unit 14 is suitable to influence, in response to a pressure increase (beyond a comparative value) upstream of the inlet aperture 3 of the basket 2, only or also the power supply of the fan motor 10. According to the embodiment, in this situation, the control unit 14 can increase the power supply of the ventilator means 10, 9 in order to rapidly free the inlet aperture 3 by a high blast of air, thus actively re-establishing a high efficiency drying condition, or it can reduce the power supply of the ventilator means 10, 9 in order to limit the energy consumption during the inefficient phase until the inlet aperture 3 frees itself, for example by the movement of the basket 2 or the weight of the laundry itself.

In accordance with a further embodiment, the control unit 14 is suitable to influence, in response to a pressure increase (beyond a comparative value) upstream of the inlet aperture 3 of the basket 2, only or also the power supply of the basket motor 12, thus varying the rotational speed and/or the sense of direction of the rotational movement for spinning the basket 2, so as to free the inlet aperture 3 thereof and, therefore, re-establish a high efficiency drying condition.

According to a further embodiment of the invention, the sensor 13 is only or also suitable to detect a very low pressure, or, in other words, a pressure below the pressure range considered indicative of an efficient drying situation, and to transmit a relative signal to the control unit 14.

A very low pressure upstream of the inlet aperture 3, indicative of a high airflow 4 speed, may occur for example when, at the start of a drying cycle, the still very wet laundry remains stuck to the cylindrical mantle 15 of the basket 2 and does not toss and spin freely in the basket, or when, towards the end of a drying cycle, the laundry is already very dry and so light as to not pose much resistance to the airflow. Both situations have been identified as being non-efficient from an energy point of view, as they entail energy consumption that does not result in an adequate reduction of the laundry moisture.

The control unit 14, suitable to recognise the signal received from the sensor 13 as indicative of too low a pressure, for example through comparison with memorised comparison values as described previously, is able to reduce or interrupt the current power supply of the resistance 11 until the pressure detected by the sensor 13 returns to the normal value, in other words to a value that indicates a normal or high drying efficiency.

In accordance with a further embodiment, the control unit 14 is suitable to influence, in response to a reduction of pressure upstream of the inlet aperture 3 of the basket 2, only or also the power supply of the fan motor 10. For example, in such a situation, the control unit 14 may reduce the power supply of the ventilator means 10, 9 for limiting energy consumption during the inefficient phase until the laundry detaches from the cylindrical wall 15, for example by means of the movement of the basket 2 or under the weight of the laundry itself.

In accordance with a further embodiment, the control unit 14 is suitable to influence, in response to a reduction (beyond a comparison value) of pressure upstream of the inlet aperture 3 of the basket 2, only or also the power supply of the basket motor 12, thus varying the rotational speed and/or the sense of direction of the rotary motion for spinning the basket 2, so as to detach the laundry from the cylindrical wall 15.

According to a further embodiment of the invention, the control unit 14 is suitable to influence the drying parameters, in the specific example the power supply of the basket motor 12, on the basis of the pressure detected by the sensor 13 and of the drying program set, thus for example also taking into account the time elapsed since the start of the drying cycle. In the presence of too low a pressure at the start of the drying cycle, the control unit 14 influences the movement of the basket 2 (frequent change of the sense of rotation, reduction of the number of revolutions in order to reduce the centrifugal force acting on the laundry) for detaching the wet laundry from the cylindrical wall 15 of the basket. Instead towards the end of the drying cycle, the control unit 14, also in response to a too low a pressure, reduces the number of revolutions or stops the basket 2, in order to reduce the consumption of electrical energy, given that the laundry is already dry.

According to a further embodiment, the sensor means comprise a sensor (not shown in the figures) for detecting directly or indirectly the flow rate of the airflow 4 upstream of the inlet aperture 3. Such means may comprise for example a rotor flowmeter and are suitable to transmit the relative signals to the control unit 14, in an identical way to that described in relation to the pressure sensor 13.

In this case, the control unit 14 is also suitable to process the signals received from the flowmeter and to influence the drying parameters in the same way as that described previously.

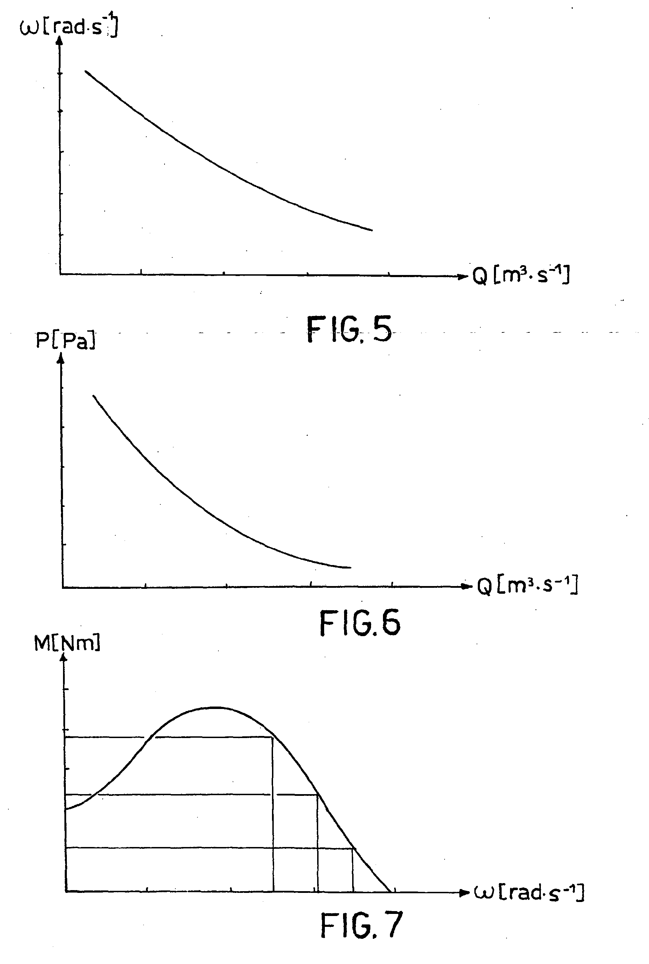

In accordance with one advantageous embodiment, shown in figures 1 and 2, the sensor means are made by the electric motor 10 of the same rotor 9 that conveys the drying air 4. This motor 10 is for example an asynchronous induction or collector brushless motor, whose speed and torque vary according to the point of work of the rotor 9, which in turn depends on the effective aperture of the inlet 3 of the basket 2, as shown for example by figures 5 to 7.

Knowing that, with an obstructed aperture 3, the pressure upstream of the aperture 3 increases and the airflow rate drops and, therefore, the number of revolutions of the motor rises whilst its torque diminishes, it is possible to use either the number of revolutions of the fan 9 or electrical parameters of the motor 10 itself, particularly the frequency/voltage (Hz/V) relationship as a value indicative of the pressure or the flow rate of the airflow 4 upstream of the inlet aperture 3.

The rotational speed of the rotor is measurable for example by an encoder, whereas the electrical values can be detected by special sensor means 16 associated to the motor 10 or included in the control device of the motor 10 or in the electronics of the control unit 14.

As a consequence, the control unit 14 receives signals relating to the electrical parameters at the motor 10 and processes them in the same way as described previously.

In the case in which the motor 10 is a brushless motor or an asynchronous motor with inverter, the control unit 14 receives signals relating to electrical values and optionally to the rotational speed and the angular position of the rotor of the motor 10 and it is prearranged to process these signals in the same way as described previously.

The drying device according to the present invention has numerous advantages.

It makes it possible to identify automatically low drying efficiency situations and to influence the drying parameters so as to increase the drying efficiency and reduce energy consumption during the inefficient phases.

Given that the low efficiency situations are very demanding for certain components (electrical resistances, motors) of the dryer and also somewhat aggressive for the laundry to be dried, the drying device according to the invention has a service life duration longer than that of prior art devices and the laundry is dried with particular delicacy.

Obviously a man skilled in the art, in order to satisfy contingent and specific needs may make further modifications and variants to the present invention, all of which being contemplated within the scope of protection of this invention, such as defined by the following claims.

## Claims

1. Device (1) for drying laundry, particularly a dryer or washer-dryer machine, comprising:
- a basket or drum (2) suitable to house the laundry and provided with an inlet aperture (3) for a drying air flow (4);
- a piping system (7, 8) with associated ventilator means (9, 10) suitable to convey said airflow (4), through said inlet aperture (3) into said basket (2);
- heating means (11), arranged in the airflow (4) upstream of the inlet aperture (3) and suitable to heat the air (4) before it enters the basket (2);
- means (12) for moving the basket (2),
wherein said device (1) is suitable to perform a drying program, wherein means (13, 10, 14) suitable to influence said drying program according to the pressure or flow rate of the airflow (4) upstream of the inlet aperture (3) are provided,
**characterised in that** it comprises a control unit (14) suitable to influence, in response to an air pressure increase beyond a comparative value upstream of the inlet aperture (3) of the basket (2), the power supply of a basket motor (12) for varying the rotational speed and/or direction of the rotational movement of the basket (2).

2. The device (1) according to claim 1, comprising sensor means (13, 16) suitable to measure a value indicative of the pressure or flow rate of the airflow (4) upstream of the inlet aperture (3), said sensor means (13, 16) being connected with said control unit (14) suitable to influence, according to said measured value, at least one of the following drying parameters:
- flow rate of the airflow (4) created by the ventilator means (9, 10);
- heating power of the heating means (11);
- rotational speed of the basket (2);
- sense of direction of the basket (2).

3. The device (1) according to claim 1 or 2, wherein the sensor means (13, 16) comprise a pressure sensor (13) associated to said piping (7) upstream of the inlet aperture (3).

4. The device (1) according to claim 1, 2 or 3, wherein said ventilator means (9, 10) comprise a fan rotor (9) that can be driven by an electrical motor (10) and said sensor means (13, 16) comprise means suitable to detect the electrical values of the motor (10).

5. The device (10) according to claim 4, wherein said sensor means (10, 13) further comprise means suitable to detect the rotational speed of the motor (10).

6. The device (1) according to any of the previous claims, wherein said sensor means (13, 16) comprise a flowmeter associated to said piping (7) upstream of the inlet aperture (3).

7. The device (1) according to any of claims 2 to 6, wherein said control unit (14) comprises a microcomputer (14) in data connection with said sensor means (10, 13) and suitable to process the signals received from the latter in order to influence said drying program on the basis of the pressure or airflow rate (4) upstream of the inlet aperture (3).

8. The device (1) according to claim 7, wherein said microcomputer (14) is suitable to compare that data supplied by the sensor means (13, 16) with comparative values, taken from special tables or work curves memorised and adapted to the different drying programs that can be performed by the device (1).

9. The device (1) according to claim 7 or 8, wherein said microcomputer (14) is connected with the ventilator means (9, 10), particularly with a fan motor (10) and suited to regulating the electrical power supply thereof.

10. The device according to claim 7, 8 or 9, wherein said microcomputer (14) is connected with the means for moving the basket (2), particularly a basket motor (12) and suitable to regulate the electrical power supply thereof.

11. The device (1) according to claim 7,8,9 or 10, wherein said microcomputer (14) is connected with the heating means, particularly a heating resistance (11) and suited to regulating the electrical power supply thereof.

12. The device (1) according to any,of the previous claims, wherein, following the detection by the sensor means (13, 16) of an air pressure higher than a preset comparison value, the control unit (14) is suitable to reduce or interrupt the current power supply of the resistance (11).

13. The device (1) according to any of the previous claims, wherein, in response to a pressure increase upstream of the inlet aperture (3)of the basket (2), the control unit (14) is suitable to influence the power supply of the ventilator means (9, 10).

14. The device (1) according to claim 13, wherein the control unit (14) increases the power supply of the fan motor (10) in order to free the inlet aperture (3) by a high blast of air.

15. The device (1) according to claim 13, wherein the control unit (14) reduces or interrupts the power supply of the fan motor (10) in order to limit the energy consumption thereof.

16. The device (1) according to any of the previous claims, wherein, in response to a reduction of air pressure upstream of the inlet aperture (3) of the basket (2), the control unit (14) is suitable to reduce or interrupt the current power supply of the resistance (11) until the pressure detected by the sensor means (13, 16) returns to the normal value.

17. The device (1) according to any of the previous claims, wherein, in response to a reduction of pressure upstream of the inlet aperture (3)of the basket (2), the control unit (14) is suitable to influence, the power supply of the fan motor (10).

18. The device (1) according to claim 17, wherein, in response to a reduction of pressure upstream of the inlet aperture (3) of the basket (2), the control unit (14) reduces the power supply of the ventilator means (10) thus reducing the energy consumption thereof.

19. The device (1) according to any of the previous claims, wherein, in response to a reduction of air pressure upstream of the inlet aperture (3) of the basket (2), the control unit (14) is suitable to influence the power supply of the means (12) for moving the basket (2), by varying the rotational speed and/or the sense of direction of the rotational motion, so as to detach the laundry from the walls (15)of the basket (2).

20. The device (1) according to any of the previous claims, wherein the control unit (14) is suitable to influence the drying program on the basis of the pressure detected by the sensor means (13, 16) and of the drying program set by the user, taking into account the time elapsed since the start of the drying cycle.

21. The device (1) according to claim 20, wherein the control unit (14), in response to too low an air pressure at the start of the drying cycle, lowers the number of revolutions of the basket and frequently changes the sense of rotation thereof, so as to reduce the centrifugal force acting on the laundry and to detach the laundry from the walls (15)of the basket (2).

22. The device (1) according to claim 20, wherein, in response to too low an air pressure at the end of the drying cycle, the control unit (14) lowers the number of revolutions or stops the basket motor (12) thus reducing the electrical energy consumption thereof.

23. Drying procedure by means of a drying air flow (4), heated by heating means (11) and conveyed by ventilator means (9, 10) through an input aperture (3) into a basket or drum (2) that contains the laundry to be dried, wherein the basket (2) is made to rotate by special movement means of the basket (12), said procedure comprising the steps of:
- the performance of a drying program;
- the detection of a parameter indicative of the pressure or flow rate of the air (4) upstream of the inlet aperture (3);
- modification of said drying program according to the pressure or flow rate of the airflow (4),
**characterised in that** it comprises the step of
- influencing, in response to an air pressure increase beyond a comparative value upstream of the inlet aperture (3) of the basket (2), the power supply of a basket motor (12) for varying the rotational speed and/or direction of the rotational movement of the basket (2).

24. The procedure according to claim 23, comprising the step of detecting the pressure of the air (4) upstream of the inlet aperture (3) through a pressure sensor (13).

25. The procedure according to claim 23, comprising the step of detecting electrical parameters of an electrical motor (10) for driving a rotor (9) and using said electrical parameters as parameters indicative of the flow rate of the airflow (4) i.e. for the pressure of the air (4) upstream of the inlet aperture (3).

26. The procedure according to claim 23 and those following, comprising the step of comparing parameter indicative of the pressure or flow rate of the air (4) upstream of the inlet aperture (3) with comparison values, thus identifying high air pressure situations, that is of reduced airflow rate.

27. The procedure according to claim 23 and those following, comprising the step of comparing the parameter indicative of the pressure or flow rate of the air (4) upstream of the inlet aperture (3) with comparison values, thus identifying reduced air pressure situations, that is of high air flow rate.

28. The procedure according to claim 23 and those following, comprising the step of reducing or interrupting the electrical power supply to the heating means (11) when the air pressure detected is high.

29. The procedure according to claim 23 and those following, comprising the step of reducing or interrupting the electrical power supply of the heating means (11) when the air pressure detected is reduced.

30. The procedure according to claim 23 and those following, comprising the step of increasing, by said ventilator means (9, 10), the airflow (4) when the air pressure detected is high.

31. The procedure according to claim 23 and those following, comprising the step of reducing, by said ventilator means (9, 10), the airflow (4) when the air pressure detected is reduced.

## Patentansprüche

1. Vorrichtung (1) zum Trocknen von Wäsche, insbesondere ein Trockner oder eine Waschtrockner-Maschine, aufweisend:
- einen Korb oder eine Trommel (2), die geeignet sind, die Wäsche aufzunehmen und mit einer Einlassöffnung (3) für einen trocknenden Luftstrom (4) versehen sind;
- Rohrleitungssystem (7, 8) mit zugeordneter Belüftungseinrichtung (9, 10), die geeignet ist, den Luftstrom (4) durch die Einlassöffnung (3) in die Trommel (2) zu leiten;
- Erwärmungseinrichtung (11), die in dem Luftstrom (4) stromaufwärts vor der Einlassöffnung (3) angeordnet und geeignet ist, die Luft (4) vor ihrem Eintritt in die Trommel (12) zu erwärmen;
- eine Einrichtung (12) zum Bewegen der Trommel (2),
wobei die Vorrichtung (1) geeignet ist, ein Trocknungsprogramm auszuführen, wobei eine Einrichtung (13, 10, 14), die geeignet ist, das Trocknungsprogramm gemäß dem Druck oder der Strömungsrate des Luftstroms (4) stromaufwärts vor der Einlassöffnung (3) zu beeinflussen, bereitgestellt ist,
**dadurch gekennzeichnet, dass**
sie eine Steuereinheit (14) enthält, die geeignet ist, in Reaktion auf einen Luftdruckanstieg über einen Vergleichswert stromaufwärts von der Einlassöffnung (3) der Trommel (2) die Stromversorgung eines Trommelmotors (12) zu beeinflussen, um die Drehzahl und/oder Richtung der Drehbewegung der Trommel (2) zu verändern.

2. Vorrichtung (1) nach Anspruch 1, mit einer Sensoreinrichtung (13, 16), die geeignet ist, einen den Druck oder die Strömungsrate des Luftstroms (4) anzeigenden Wert stromaufwärts vor der Einlassöffnung (3) zu messen, wobei die Sensoreinrichtung (13, 16) mit der Steuereinheit (14) verbunden ist, um gemäß dem gemessenen Wert geeignet wenigstens einen von den nachstehenden Trocknungsparametern zu beeinflussen.
- Strömungsrate des Luftstroms (4), der durch die Belüftungseinrichtung (9, 10) erzeugt wird,
- Erwärmungsleistung der Erwärmungseinrichtung (11);
- Drehzahl der Trommel (2);
- Drehrichtung der Trommel (2).

3. Vorrichtung (1) nach Anspruch 1 oder 2, wobei die Sensoreinrichtung (13, 16) einen Drucksensor (13) umfasst, der dem Rohrsystem (7) stromaufwärts vor der Einlassöffnung (3) zugeordnet ist.

4. Vorrichtung (1) nach Anspruch 1, 2 oder 3, wobei die Belüftungseinrichtung (9, 10) einen Gebläserotor (9) umfasst, der von einem elektrischen Motor (10) angetrieben wird, und die Sensoreinrichtung (13, 16) eine Einrichtung umfasst, die geeignet ist, elektrische Werte des Motors (10) zu detektieren.

5. Vorrichtung (1) nach Anspruch 4, wobei die Sensoreinrichtung (10, 13) ferner eine Einrichtung umfasst, um geeignet die Drehzahl des Motors (10) zu detektieren.

6. Vorrichtung (1) nach einem der vorstehenden Ansprüche, wobei die Sensoreinrichtung (13, 16) einen Strömungsmesser zugeordnet zu der Rohrsystem (7) stromaufwärts vor der Einlassöffnung (3) umfasst.

7. Vorrichtung (1) nach einem der Ansprüche 2 bis 6, wobei die Steuereinheit (14) einen Mikrocomputer (14) in Datenverbindung mit der Sensoreinrichtung (10, 13) umfasst und geeignet ist, die von den Letzteren empfangenen Signale zu verarbeiten, um das Trocknungsprogramm auf der Basis des Druckes oder der Luftströmungsrate (4) stromaufwärts vor der Einlassöffnung (3) zu beeinflussen

8. Vorrichtung (1) nach Anspruch 7, wobei der Mikrocomputer (14) geeignet ist, diese von der Sensoreinrichtung (13, 16) gelieferten Daten mit Vergleichswerten zu vergleichen, die aus speziellen Tabellen oder gespeicherten Arbeitskurven entnommen werden und an die unterschiedlichen Trocknungsprogramme angepasst sind, die von der Vorrichtung (1) durchgeführt werden können

9. Vorrichtung (1) nach Anspruch 7 oder 8, wobei der Mikrocomputer (14) mit der Belüftungseinrichtung (9, 10), insbesondere mit einem Gebläsemotor (10) verbunden ist und geeignet ist, dessen elektrische Stromversorgung zu regeln.

10. Vorrichtung nach Anspruch 7, 8 oder 9, wobei der Mikrocomputer (14) mit der Einrichtung zum Bewegen der Trommel (12), insbesondere mit einem Trommelmotor (12) verbunden und geeignet ist, dessen elektrische Stromversorgung zu regeln.

11. Vorrichtung (1) nach Anspruch 7, 8, 9 oder 10, wobei der Mikrocomputer (14) mit der Erwärmungseinrichtung, insbesondere einem Erwärmungswiderstand (11) verbunden ist, und geeignet ist, dessen elektrische Stromversorgung zu regeln,

12. Vorrichtung (1) nach einem der vorstehenden Ansprüche, wobei anschließend an die Detektion eines höheren Luftdrucks als eines voreingestellten Vergleichswertes durch die Sensoreinrichtung (13, 16), die Steuereinheit (14) geeignet ist, die momentane Stromversorgung des Widerstandes (11) zu reduzieren oder zu unterbrechen

13. Vorrichtung (1) nach einem der vorstehenden Ansprüche, wobei in Reaktion auf eine Druckzunahme stromaufwärts vor der Einlassöffnung (3) der Trommel (2) die Steuereinheit (14) geeignet ist, die Stromversorgung der Belüfiungseinrichtung (9, 10) zu beeinflussen.

14. Vorrichtung (1) nach Anspruch 13, wobei die Steuereinheit (14) die Stromversorgung des Gebläsemotors (10) erhöht, um die Einlassöffnung (3) durch einen starken Luftstromstoß frei zu machen.

15. Vorrichtung (1) nach Anspruch 13, wobei die Steuereinheit (14) die Stromversorgung des Gebläsemotors (10) reduziert oder unterbricht, um dessen Energieverbrauch zu reduzieren

16. Vorrichtung (1) nach einem der vorstehenden Ansprüche, wobei in Reaktion auf eine Reduzierung des Luftstroms stromaufwärts vor der Einlassöffnung (3) der Trommel (2) die Steuereinheit (14) geeignet ist, die momentane Stromversorgung des Widerstandes (11) zu reduzieren oder zu unterbrechen, bis der von der Sensoreinrichtung (13, 16) detektierte Druck auf den normalen Wert zurückkehrt.

17. Vorrichtung (1) nach einem der vorstehenden Ansprüche, wobei in Reaktion auf eine Reduzierung des Luftstroms stromaufwärts vor der Einlassöffnung (3) der Trommel (2) die Steuereinheit (14) geeignet ist, die Stromversorgung des Gebläsemotors (10) zu beeinflussen.

18. Vorrichtung (1) nach Anspruch 17, wobei in Reaktion auf eine Reduzierung des Luftstroms stromaufwärts vor der Einlassöffnung (3) der Trommel (2) die Steuereinheit (14) die Stromversorgung der Gebläseeinrichtung (10) reduziert und damit deren Energieverbrauch reduziert.

19. Vorrichtung (1) nach einem der vorstehenden Ansprüche, wobei in Reaktion auf eine Reduzierung des Luftstroms stromaufwärts vor der Einlassöffnung (3) der Trommel (2) die Steuereinheit (14) geeignet ist, die Stromversorgung der Einrichtung (12) zum Bewegen der Trommel (2) zu beeinflussen, indem die Drehzahl und/oder die Drehrichtung der Drehbewegung verändert wird, um somit die Wäsche von den Wänden (15) der Trommel (2) zu lösen.

20. Vorrichtung (1) nach einem der vorstehenden Ansprüche, wobei die Steuereinheit (14) geeignet ist, das Trocknungsprogramm auf der Basis des von der Sensoreinrichtung (13, 16) detektierten Druckes und des von dem Benutzer eingestellten Trocknungsprogramms zu beeinflussen, wobei die seit dem Start des Trocknungszyklus verstrichene Zeit berücksichtigt wird

21. Vorrichtung (1) nach Anspruch 20, wobei die Steuereinheit (14) in Reaktion auf einen zu niedrigen Luftdruck zu Beginn des Trocknungszyklus die Drehzahl der Trommel reduziert und häufig deren Drehrichtung ändert, um somit die auf die Wäsche einwirkende Zentrifugalkraft zu reduzieren und die Wäsche von den Wänden (15) der Trommel (2) zu lösen

22. Vorrichtung (1) nach Anspruch 20, wobei in Reaktion auf einen zu niedrigen Luftdruck am Ende des Trocknungszyklus die Steuereinheit (14) die Drehzahl verringert oder den Trommelmotor (12) anhält, um somit dessen elektrischen Energieverbrauch zu reduzieren

23. Trocknungsverfahren mittels eines trocknenden Luftstroms (4), der von einer Erwärmungseinrichtung (11) erwärmt und von einer Belüftungseinrichtung (9, 10) durch eine Eingangsöffnung (3) in einen Korb oder eine Trommel (2), die die zu trocknende Wäsche enthält, transportiert wird, wobei die Trommel (2) durch eine spezielle Bewegungseinrichtung der Trommel (12) in Drehung versetzt wird, wobei das Verfahren die Schritte aufweist:
- die Durchführung eines Trocknungsprogramms,
- die Detektion eines den Druck oder die Strömungsrate der Luft (4) stromaufwärts vor der Einlassöffnung (3) anzeigenden Parameters;
- eine Modifikation des Trocknungsprogramms abhängig von dem Druck oder der Strömungsrate des Luftstroms (4),
**dadurch gekennzeichnet, dass** es den Schritt aufweist:
- Beeinflussen, in Reaktion auf einen Luftdruckanstieg über einen Vergleichswert stromaufwärts vor der Einlassöffnung (3) der Trommel (2), der Stromversorgung eines Trommelmotors (12) zum Verändern der Drehzahl und/oder Richtung der Drehbewegung der Trommel (2).

24. Verfahren nach Anspruch 23, mit dem Schritt einer Detektion des Luftdruckes (4) stromaufwärts vor der Einlassöffnung (3) über einen Drucksensor (13).

25. Verfahren nach Anspruch 23, mit dem Schritt einer Detektion elektrischer Parameter eines Elektromotors (10) für den Antrieb eines Rotors (9) und der Verwendung der elektrischen Parameter als die Strömungsrate des Luftstroms (4), das heißt, des Drucks der Luft (4) stromaufwärts vor der Einlassöffnung (3) anzeigender Parameter.

26. Verfahren nach Anspruch 23 und den nachfolgenden, mit dem Schritt des Vergleichs des den Luftdruck oder die Strömungsrate der Luft (4) stromaufwärts vor der Einlassöffnung (3) anzeigenden Parameters mit Vergleichswerten, und somit Identifizieren von Situationen hohen Luftdrucks, das heißt, einer reduzierten Luftströmungsrate.

27. Verfahren nach Anspruch 23 und den nachfolgenden, mit dem Schritt des Vergleichs des den Druck oder die Strömungsrate der Luft (4) stromaufwärts vor der Einlassöffnung (3) anzeigenden Parameters mit Vergleichswerten, und somit Identifizieren von Situationen verringerten Luftdrucks, das heißt, einer hohen Luftströmungsrate.

28. Verfahren nach Anspruch 23 und den nachfolgenden, mit dem Schritt einer Reduzierung oder Unterbrechung der elektrischen Energieversorgung der Erwärmungseinrichtung (11), wenn der detektierte Luftdruck hoch ist.

29. Verfahren nach Anspruch 23 und den nachfolgenden, mit dem Schritt einer Reduzierung oder Unterbrechung der elektrischen Energieversorgung der Erwärmungseinrichtung (11), wenn der detektierte Luftdruck verringert ist.

30. Verfahren nach Anspruch 23 und den nachfolgenden, mit dem Schritt der Erhöhung des Luftstroms (4) mittels der Belüftungseinrichtung (9, 10), wenn der detektierte Luftdruck hoch ist

31. Verfahren nach Anspruch 23 und den nachfolgenden, mit dem Schritt der Reduzierung des Luftstroms (4) mittels der Belüftungseinrichtung (9, 10), wenn der detektierte Luftdruck hoch ist.

## Revendications

1. Dispositif (1) destiné à sécher le linge, en particulier sèche-linge ou lave-linge séchant, comprenant :
- un panier ou tambour (2) apte à recevoir le linge et pourvu d'une ouverture d'entrée (3) pour flux d'air de séchage (4) ;
- un système de conduits (7, 8) avec un moyen de ventilation associé (9, 10) apte à transporter ledit flux d'air (4) via ladite ouverture d'entrée (3) jusque dans ledit panier (2) ;
- un moyen de chauffage (11), disposé dans le flux d'air (4) en amont de l'ouverture d'entrée (3) et apte à chauffer l'air (4) avant qu'il pénètre dans le panier (2) ;
- un moyen (12) pour mouvoir le panier (2),
dans lequel ledit dispositif (1) est apte à exécuter un programme de séchage, des moyens (13, 10, 14) aptes à influencer ledit programme de séchage en fonction de la pression ou du débit du flux d'air (4) en amont de l'ouverture d'entrée (3) étant prévus,
**caractérisé en ce qu'**il comprend une unité de commande (14) apte à influencer, en réponse à une augmentation de pression d'air au-delà d'une valeur comparative en amont de l'ouverture d'entrée (3) du panier (2), l'alimentation en électricité d'un moteur de panier (12) pour faire varier la vitesse de rotation et/ou le sens de rotation du panier (2) .

2. Dispositif (1) selon la revendication 1, comprenant un moyen de détection (13, 16) apte à mesurer une valeur indicative de la pression ou du débit du flux d'air (4) en amont de l'ouverture d'entrée (3), ledit moyen de détection (13, 16) étant relié à ladite unité de commande (14) apte à influencer, en fonction de ladite valeur mesurée, au moins l'un des paramètres de séchage suivants :
- débit du flux d'air (4) créé par le moyen de ventilation (9, 10) ;
- puissance de chauffage du moyen de chauffage (11) ;
- vitesse de rotation du panier (2) ;
- sens de rotation du panier (2).

3. Dispositif (1) selon la revendication 1 ou 2, dans lequel le moyen de détection (13, 16) comprend un capteur de pression (13) associé audit conduit (7) en amont de l'ouverture d'entrée (3).

4. Dispositif (1) selon la revendication 1, 2 ou 3, dans lequel ledit moyen de ventilation (9, 10) comprend un rotor de ventilateur (9) qui peut être entraîné par un moteur électrique (10) et ledit moyen de détection (13, 16) comprend un moyen apte à détecter les valeurs électriques du moteur (10).

5. Dispositif (10) selon la revendication 4, dans lequel ledit moyen de détection (10, 13) comprend en outre un moyen apte à détecter la vitesse de rotation du moteur (10).

6. Dispositif (1) selon l'une quelconque des revendications précédentes, dans lequel ledit moyen de détection (13, 16) comprend un débitmètre associé audit conduit (7) en amont de l'ouverture d'entrée (3).

7. Dispositif (1) selon l'une quelconque des revendications 2 à 6, dans lequel ladite unité de commande (14) comprend un micro-ordinateur (14) en connexion de données avec ledit moyen de détection (10, 13) et apte à traiter les signaux reçus du moyen de détection afin d'influencer ledit programme de séchage sur la base de la pression ou du débit de flux d'air (4) en amont de l'ouverture d'entrée (3).

8. Dispositif (1) selon la revendication 7, dans lequel ledit micro-ordinateur (14) est apte à comparer les données fournies par le moyen de détection (13, 16) avec des valeurs comparatives, prises dans des courbes expérimentales ou tables spéciales mémorisées et adaptées aux différents programmes de séchage qui peuvent être exécutés par le dispositif (1).

9. Dispositif (1) selon la revendication 7 ou 8, dans lequel ledit micro-ordinateur (14) est relié au moyen de ventilation (9, 10), en particulier avec un moteur de ventilateur (10) et apte à réguler l'alimentation en énergie électrique de celui-ci.

10. Dispositif (1) selon la revendication 7, 8 ou 9, dans lequel ledit micro-ordinateur (14) est relié au moyen pour mouvoir le panier (2), en particulier un moteur de panier (12) et apte à réguler l'alimentation en énergie électrique de celui-ci.

11. Dispositif (1) selon la revendication 7, 8, 9 ou 10, dans lequel ledit micro-ordinateur (14) est relié au moyen de chauffage, en particulier une résistance de chauffage (11) et apte à réguler l'alimentation en énergie électrique de celle-ci.

12. Dispositif (1) selon l'une quelconque des revendications précédentes, dans lequel, après la détection, par le moyen de détection (13, 16) d'une pression d'air supérieure à une valeur de comparaison prédéterminée, l'unité de commande (14) est apte à réduire ou interrompre l'alimentation en énergie électrique de la résistance (11).

13. Dispositif (1) selon l'une quelconque des revendications précédentes, dans lequel, en réponse à une augmentation de pression en amont de l'ouverture d'entrée (3) du panier (2), l'unité de commande (14) est apte à influencer l'alimentation en électricité du moyen de ventilation (9, 10).

14. Dispositif (1) selon la revendication 13, dans lequel l'unité de commande (14) augmente l'alimentation en électricité du moteur de ventilateur (10) afin de libérer l'ouverture d'entrée (3) par un souffle d'air élevé.

15. Dispositif (1) selon la revendication 13, dans lequel l'unité de commande (14) réduit ou interrompt l'alimentation en électricité du moteur de ventilateur (10) afin de limiter la consommation d'énergie de celui-ci.

16. Dispositif (1) selon l'une quelconque des revendications précédentes, dans lequel, en réponse à une réduction de pression d'air en amont de l'ouverture d'entrée (3) du panier (2), l'unité de commande (14) est apte à réduire ou interrompre l'alimentation en énergie électrique de la résistance (11) jusqu'à ce que la pression détectée par le moyen de détection (13, 16) retourne à la valeur normale.

17. Dispositif (1) selon l'une quelconque des revendications précédentes, dans lequel, en réponse à une réduction de pression en amont de l'ouverture d'entrée (3) du panier (2), l'unité de commande (14) est apte à influencer l'alimentation en électricité du moteur de ventilateur (10).

18. Dispositif (1) selon la revendication 17, dans lequel, en réponse à une réduction de pression en amont de l'ouverture d'entrée (3) du panier (2), l'unité de commande (14) réduit l'alimentation en électricité du moyen de ventilation (9, 10), réduisant ainsi sa consommation d'énergie.

19. Dispositif (1) selon l'une quelconque des revendications précédentes, dans lequel, en réponse à une réduction de pression d'air en amont de l'ouverture d'entrée (3) du panier (2), l'unité de commande (14) est apte à influencer l'alimentation en électricité du moyen (12) pour mouvoir le panier (2), en faisant varier la vitesse de rotation et/ou le sens de rotation, afin de détacher le linge des parois (15) du panier (2).

20. Dispositif (1) selon l'une quelconque des revendications précédentes, dans lequel l'unité de commande (14) est apte à influencer le programme de séchage sur la base de la pression détectée par le moyen de détection (13, 16) et du programme de séchage déterminé par l'utilisateur, en tenant compte du temps qui s'est écoulé depuis le début du cycle de séchage.

21. Dispositif (1) selon la revendication 20, dans lequel l'unité de commande (14), en réponse à une trop faible pression d'air au début du cycle de séchage, diminue le nombre de tours du panier et modifie fréquemment le sens de rotation de celui-ci, afin de réduire la force centrifuge agissant sur le linge et de détacher le linge des parois (15) du panier (2).

22. Dispositif (1) selon la revendication 20, dans lequel, en réponse à une trop faible pression d'air à la fin du cycle de séchage, l'unité de commande (14) diminue le nombre de tours ou arrête le moteur de panier (12), réduisant ainsi la consommation d'énergie électrique de celui-ci.

23. Procédé de séchage au moyen d'un flux d'air de séchage (4), chauffé par un moyen de chauffage (11) et transporté par un moyen de ventilation (9, 10) via une ouverture d'entrée (3) jusque dans un panier ou tambour (2) qui contient le linge à sécher, le panier (2) étant amené à tourner par un moyen de déplacement spécial du panier (2), ledit procédé comprenant les étapes consistant à :
- exécuter un programme de séchage ;
- détecter un paramètre indiquant la pression ou le débit de l'air (4) en amont de l'ouverture d'entrée (3) ;
- modifier ledit programme de séchage en fonction de la pression ou du débit du flux d'air (4),
**caractérisé en ce que** le procédé comprend l'étape consistant à :
- influencer, en réponse à une augmentation de pression d'air au-delà d'une valeur comparative en amont de l'ouverture d'entrée (3) du panier (2), l'alimentation en électricité d'un moteur de panier (12) pour faire varier la vitesse de rotation et/ou le sens de rotation du panier (2).

24. Procédé selon la revendication 23, comprenant l'étape consistant à détecter la pression de l'air (4) en amont de l'ouverture d'entrée (3) au moyen d'un capteur de pression (13).

25. Procédé selon la revendication 23, comprenant l'étape consistant à détecter des paramètres électriques d'un moteur électrique (10) pour entraîner un rotor et à utiliser lesdits paramètres électriques en tant que paramètres indiquant le débit du flux d'air (4), c'est-à-dire pour la pression de l'air (4) en amont de l'ouverture d'entrée (3).

26. Procédé selon la revendication 23 et celles qui suivent, comprenant l'étape consistant à comparer un paramètre indiquant la pression ou le débit de l'air (4) en amont de l'ouverture d'entrée (3) avec des valeurs de comparaison, identifiant ainsi des situations de pression d'air élevée, c'est-à-dire de débit de flux d'air réduit.

27. Procédé selon la revendication 23 et celles qui suivent, comprenant l'étape consistant à comparer le paramètre indiquant la pression ou le débit de l'air (4) en amont de l'ouverture d'entrée (3) avec des valeurs de comparaison, identifiant ainsi des situations de pression d'air réduite, c'est-à-dire de débit de flux d'air élevé.

28. Procédé selon la revendication 23 et celles qui suivent, comprenant l'étape consistant à réduire ou interrompre l'alimentation en énergie électrique du moyen de chauffage (11) lorsque la pression d'air détectée est élevée.

29. Procédé selon la revendication 23 et celles qui suivent, comprenant l'étape consistant à réduire ou interrompre l'alimentation en énergie électrique du moyen de chauffage (11) lorsque la pression d'air détectée est réduite.

30. Procédé selon la revendication 23 et celles qui suivent, comprenant l'étape consistant à augmenter, par ledit moyen de ventilation (9, 10), le flux d'air (4) lorsque la pression d'air détectée est élevée.

31. Procédé selon la revendication 23 et celles qui suivent, comprenant l'étape consistant à diminuer, par ledit moyen de ventilation (9, 10), le flux d'air (4) lorsque la pression d'air détectée est réduite.
